Europäisches Patentamt

European Patent Office

Office européen des brevets

(19)

(11) **EP 0 712 259 A2**

(12) **DEMANDE DE BREVET EUROPEEN**

(43) Date de publication:
    **15.05.1996 Bulletin 1996/20**

(51) Int Cl.$^6$: **H04Q 7/36**

(21) Numéro de dépôt: **95402492.3**

(22) Date de dépôt: **07.11.1995**

(84) Etats contractants désignés:
    **AT BE CH DE DK ES FR GB IT LI NL SE**

(30) Priorité: **10.11.1994 FR 9413553**

(71) Demandeur: **ALCATEL MOBILE COMMUNICATION FRANCE F-75008 Paris (FR)**

(72) Inventeur: **Cherpantier, Corinne F-92380 Garches (FR)**

(74) Mandataire:
    **Pothet, Jean Rémy Emile Ludovic et al c/o SOSPI 14-16 rue de la Baume F-75008 Paris (FR)**

(54) **Réseau cellulaire multicouche de radiocommunications et procédé associé**

(57)     L'invention fournit un procédé d'optimisation fréquentielle d'un réseau cellulaire multicouche de radiocommunications avec des mobiles lors d'une adjonction d'une station de base de microcellule quelconque définissant une microcellule donnée qui appartient à une zone de couverture d'une macrocellule donnée,

ledit réseau étant un à accès multiple à répartition dans le temps et accès multiple à répartition en fréquence combinés, et comprenant des macrocellules, et des microcellules,

chacune desdites macrocellules étant associée à au moins une fréquence balise et au moins une fréquence de trafic, et chacune desdites microcellules étant associée à au moins une fréquence balise,

caractérisé en ce qu'il comprend l'étape d'allocation à ladite microcellule d'une fréquence balise identique à une fréquence de trafic utilisée dans une macrocelluleimmédiatement adjacente à ladite macrocellule donnée.

FIG.2

## Description

La présente invention concerne de manière générale un réseau cellulaire multicouche de radiocommunications avec des mobiles. Un tel réseau comprend des premières stations de base définissant des zones de couverture macrocellulaire, ou macrocellules, respectives, et des secondes stations de base définissant des zones de couverture microcellulaire, ou microcellules, respectives. Le terme "microcellule" recouvre à la fois la notion de picocellule et microcellule. Les microcellules ont un faible diamètre et sont utilisées pour satisfaire des besoins locaux, dans le but, par exemple, de desservir des zones géographiques ayant des concentrations relativement élevées de mobiles, tels que carrefours, rues commerçantes, aéroports et centres commerciaux pour des microcellules, et étage d'un immeuble pour des picocellules, ou desservir des zones encaissées d'accès radioélectrique difficile. Les macrocellules, pour leur part, ont un diamètre sensiblement plus grand, et sont destinés à couvrir des zones à faible densité de mobiles et à accès radioélectrique plus étendu. Une microcellule peut être ou bien interne, auquel cas elle appartient à une macrocellule qui la recouvre, le terme "macrocellule" étant alors utilisé pour désigner la couche la plus extérieure d'une structure cellulaire, ou bien externe, auquel cas elle n'est pas couverte par une macrocellule.

L'architecture cellulaire d'un réseau de radiocommunications avec des mobiles pose le problème de la réutilisation de fréquence par cette formulation générique: typiquement, une fréquence utilisée dans une cellule donnée ne peut être réutilisée dans une cellule immédiatement adjacente à ladite cellule donnée. Dans le cas où des macrocellules et microcellules coexistent, sont définis typiquement deux étapes de planification fréquentielle, relatives respectivement aux macrocellules et aux microcellules. Ces problèmes de planification se posent surtout lorsque des nouvelles microcellules sont rajoutées en fonction de besoins locaux.

La première étape de planification concerne uniquement les macrocellules. Ces macrocellules se partage un spectre de fréquences donné et l'on définit un motif géométrique de réutilisation de fréquence, définissant une distance minimale séparant deux macrocellules pouvant réutiliser une même fréquence. Il est à noter que dans un système de radiocommunications à accès multiple à répartition dans le temps (AMRT) et à accès multiple à répartition en fréquence (AMRF) combinés, de type GSM ou DCS-1800, la technique de saut de fréquence offre un gain statistique significatif sur la qualité des liaisons de trafic établies en permettant l'utilisation d'un nombre limité de fréquences identiques dans des cellules voisines, tel que cela est décrit dans l'ouvrage "The G.S.M System for Mobile Communications" produit et publié par M.B Pautet et M. Mouly, Edition 1992, pages 218-223.

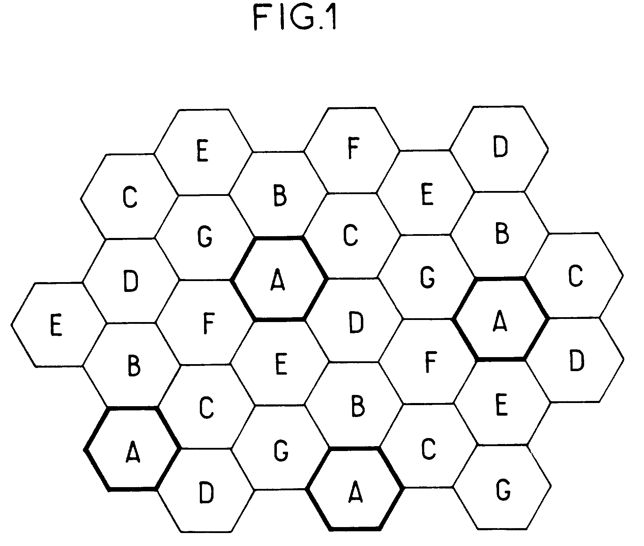

La seconde étape de planification concerne les microcellules. Pour cette étape, deux techniques sont proposées. **La première technique** préconise de dédier une première portion du spectre total disponible pour l'utilisation par des microcellules seulement. Dans ce cas, cette première portion est strictement réservée aux microcellules et ne peut être utilisée par des macrocellules. Inversement, une seconde portion, complémentaire à cette première portion dans tout le spectre disponible, est dédié aux macrocellules et ne peut être utilisé par des microcellules. Selon cette technique, il en résulte que dans une zone couverte par une macrocellule ne contenant que quelques microcellules, le partage du spectre peut apparaître défavorable pour ladite macrocellule. En effet, les microcellules, utilisées pour une faible étendue géographique, sont statistiquement moins sollicitées que la macrocellule pour supporter des communications et disposent d'une portion du spectre total disponible importante pour cette faible étendue, tandis que la macrocellule est utilisée à elle seule pour une étendue géographique importante, et ne dispose pour cela que d'une portion du spectre total qui est relativement réduite. Inversement, dans une zone couverte par une macrocellule contenant de nombreuses microcellules, le partage du spectre est défavorable aux microcellules. En effet, les microcellules sont utilisées pour une grande étendue géographique et disposent d'une portion du spectre total disponible relativement faible pour cette grande étendue, tandis que la macrocellule est utilisée pour une étendue géographique réduite, et dispose pour cela d'une portion relativement importante du spectre total. **La seconde technique** préconise, pour sa part, d'utiliser dans une microcellule donnée une portion de spectre correspondant à une portion de spectre utilisée par des macrocellules très distantes. Dans ce cas, la capacité totale, en terme de spectre, des macrocellules n'est pas affectée par un partage de spectre. Cette seconde technique, telle que rappelée succinctement dans la demande de brevet européen EP-A-2 697 390 (ERICSSON), présente néanmoins une limitation en ce qu'elle ne peut être mise en oeuvre que si l'on définit un motif géométrique de réutilisation de fréquence qui limite la bande de spectre disponible pour chaque macrocellule. Cela est expliqué en référence à la figure 1 qui représente un motif de réutilisation de fréquence dit à 7 cellules. Selon ce motif, le spectre total disponible est divisé en 7 sous-bandes de fréquence différentes, notées A, B, C, D, E, F et G. Chaque macrocellule donnée, représentée sous forme hexagonale, est telle qu'elle est contiguë à et entourée par 6 macrocellules utilisant 6 bandes de fréquence respectives chacune distincte de la bande de fréquence respective de ladite macrocellule donnée. Pour une microcellule donnée appartenant à l'une de ces macrocellules, un tel motif géographique de réutilisation de fréquence empêche l'utilisation par cette microcellule de l'une quelconque des fréquences du spectre total disponible puisque cette fréquence est utilisée par une macrocellule dont la zone de couverture est située à une distance inférieure au diamètre d'une macrocellule par rapport à ladite microcellule, et induirait donc un brouillage. Ainsi, pour remédier à ce problème, il conviendrait d'étendre le motif à un nombre de cellules très élevé de sorte que chaque macrocellule n'est pas contiguë à et entourée par des macrocellules qui définissent ensemble la totalité du spectre disponible. Ce principe va alors à l'encontre d'une optimisation de l'utilisation du spectre par les macrocellules, puisque la portion du spectre allouée à chaque macrocellule est réduite. La demande de brevet GB-A-2 260 879 décrit un procédé d'allocation de canal de contrôle à une microcellule à installer. Le procédé prévoit la mesure par la microcellule à installer des niveaux de puissance des canaux de trafic des macrocellules environantes, la sélection de celui de ces canaux de trafic qui présente un niveau de puissance minimal, et l'utilisation de ce canal sélectionné comme fréquence de contrôle dans la microcellule à installer. Ce procédé présente l'inconvénient majeur d'utiliser comme canal de contrôle dans la microcellule à installer une fréquence identique à une fréquence d'un canal de trafic dans une macrocellule a priori lointaine de la microcellule à installer. Cela interdit par la suite d'utiliser cette même fréquence comme canal de trafic dans ladite microcellule à installer. Il en résulte donc une limitation dans la capacité du réseau.

L'invention vise à résoudre les inconvénients précités selon la technique antérieure, qui induisent une limitation de la réutilisation fréquentielle dans des réseaux radiotéléphoniques cellulaires, de type G.S.M.

A cette fin, un procédé d'optimisation fréquentielle d'un réseau cellulaire multicouche de radiocommunications avec des mobiles lors d'une adjonction d'une station de base de microcellule quelconque définissant une microcellule donnée qui appartient à une zone de couverture d'une macrocellule donnée,

ledit réseau étant un à accès multiple à répartition dans le temps et accès multiple à répartition en fréquence) combinés, et comprenant des macrocellules, et des microcellules,
chacune desdites macrocellules étant associée à au moins une fréquence balise et au moins une fréquence de trafic, et chacune desdites microcellules étant associée à au moins une fréquence balise,

est caractérisé en ce qu'il comprend l'étape d'allocation à ladite microcellule d'une fréquence balise identique à une fréquence de trafic utilisée dans une macrocellule immédiatement adjacente à ladite macrocellule donnée.

La limitation selon la technique antérieure de l'utilisation possible de fréquences à la fois par des macrocellules et des microcellules résulte du fait que l'art antérieur ne distingue pas les différentes fréquences selon leur nature à des fins de planification de fréquence. Dans le cadre d'une réseau cellulaire de radiocommunications avec des mobiles à accès multiple à répartition dans le temps et accès multiple à répartition en fréquence combinés, de type G.S.M, il apparaît tout à fait opportun de distinguer, pour une cellule donnée, microcellule ou macrocellule, une fréquence balise d'une fréquence de trafic. Dans un réseau cellulaire de type G.S.M, il est mis en oeuvre un mode de transmission radioélectrique duplex entre station de base et mobile utilisant une ou plusieurs paires de fréquences, l'une et l'autre des fréquences de chaque paire étant associées respectivement à une émission de sens montant, à partir du mobile vers la station de base, et une émission de sens descendant, à partir de la station de base vers le mobile. La transmission sur voie radioélectrique est organisée en trames, montantes et descendantes, ayant chacune une durée de 4,615 ms et comprenant N=8 intervalles temporels élémentaires, ou fenêtres. Chaque intervalle temporel associé à une fréquence forme un canal.

Deux fréquences balises porteuses respectivement de sens montant et de sens descendant véhiculent, à partir du mobile vers la station de base et à partir de la station de base vers le mobile, des canaux dits de signalisation. Ces canaux de signalisation comprennent des canaux monodirectionnels de diffusion d'information générale (BCCH en terminologie anglo-saxonne pour BroadCast CHannel) comprenant des sous-canaux de synchronisation fréquentielle (FCH) et temporelle (SCH), des canaux monodirectionnels de contrôle commun (CCCH en terminologie anglo-saxonne pour Common Control CHannel), et éventuellement, tel que cela peut être le cas dans des cellules de faible capacité (microcellules), des canaux bidirectionnels d'échange de données de signalisation (SDCCH en terminologie anglo-saxonne pour Stand-alone Dedicated Control CHannel). Dans le sens descendant, la fréquence balise porteuse de sens descendant est émise en continu pour permettre aux mobiles de mesurer la puissance reçue en provenance de la station de base concernée et véhicule, avec répétition maximale d'un intervalle temporel par trame (soit 1 intervalle temporel sur 8) tous les canaux BCCH et certains canaux CCCH qui sont un canal d'appel de mobile et un canal d'allocation de ressources, et éventuellement des canaux descendants SDCCH pour mettre à jour des tables d'abonné dans des mobiles. Dans le sens montant, la fréquence balise porteuse de sens montant est émise et véhicule, avec une répétition maximale d'un intervalle temporel par trame (pouvant être moindre en fonction des besoins des terminaux), le canal restant de contrôle commun, à savoir un canal de demande d'accès aléatoire des mobiles RACH, et éventuellement des canaux montants SDCCH.

Deux fréquences de trafic porteuses respectivement de sens montant et de sens descendant véhiculent, à partir d'un mobile vers la station de base et à partir de la station de base vers le mobile, un canal de trafic bidirectionnel, également avec une répétition d'un intervalle temporel par trame dès que ce canal de trafic est établi.

Ainsi, en résumé, il peut être remarqué que:

- la fréquence balise de sens descendant est émise en continu,
- la fréquence balise de sens montant est émise avec une répétition maximale d'un intervalle temporel par trame, en fonction des besoins des terminaux,
- deux fréquences de trafic, respectivement de sens montant et descendant, sont émises avec une répétition d'un intervalle temporel par trame dès lors qu'une communication est établie.

L'invention met donc à profit ces caractéristiques pour définir un réseau de radiocommunications à plan de réutilisation de fréquence optimisé. Le réseau cellulaire multicouche de radiocommunications est caractérisé en ce qu'une microcellule appartenant à une zone de couverture d'une macrocellule donnée utilise une fréquence balise identique à une fréquence de trafic utilisée dans une macrocellule immédiatement adjacente à ladite macrocellule donnée.

Typiquement, le réseau cellulaire met en oeuvre un mode duplex à deux fréquences, respectivement de sens montant et de sens descendant, et la microcellule utilise, d'une part, une fréquence balise de sens montant identique à une fréquence de trafic de sens montant utilisée dans la macrocellule adjacente, et, d'autre part, une fréquence balise de sens descendant identique à une fréquence de trafic de sens descendant utilisée dans cette macrocellule adjacente.

Avantageusement, le réseau couvre une zone urbaine et est un réseau conforme aux normes G.S.M, ou un réseau conforme aux normes DCS-1800.

Une microcellule selon l'invention appartenant à une zone de couverture d'une macrocellule donnée, utilise une fréquence balise identique à une fréquence de trafic utilisée dans une macrocellule adjacente à ladite macrocellule donnée.

L'invention concerne enfin un organe d'allocation de fréquence pour une microcellule appartenant à une zone de couverture d'une macrocellule donnée. L'organe est caractérisé en ce qu'il comprend un moyen pour allouer à ladite microcellule une fréquence balise identique à une fréquence de trafic utilisée dans une macrocellule immédiatement adjacente à ladite macrocellule donnée.

D'autres caractéristiques et avantages de la présente invention apparaîtront plus clairement à la lecture de la description suivante, en référence aux dessins annexés correspondants, dans lesquels :

- la figure 1, déjà commentée, montre un motif géométrique de réutilisation de fréquence, dit à sept cellules, dans un réseau cellulaire de radiocommunications avec des mobiles ;
- la figure 2 représente une portion d'un réseau cellulaire multicouche de radiocommunications avec des mobiles, incluant notamment une microcellule et une macrocellule utilisant respectivement des paire de fréquences balises et paire de fréquences de trafic qui sont identiques;
- la figure 3 est un diagramme schématique d'un bilan des brouillages existant entre les microcellule et macrocellule représentées dans la figure 2; et
- la figure 4 montre une multitrame-51 de liaison montante, formant la structure logique temporelle d'échange de données de signalisation en provenance de mobiles vers une station de base de cellule dans le cadre du G.S.M.

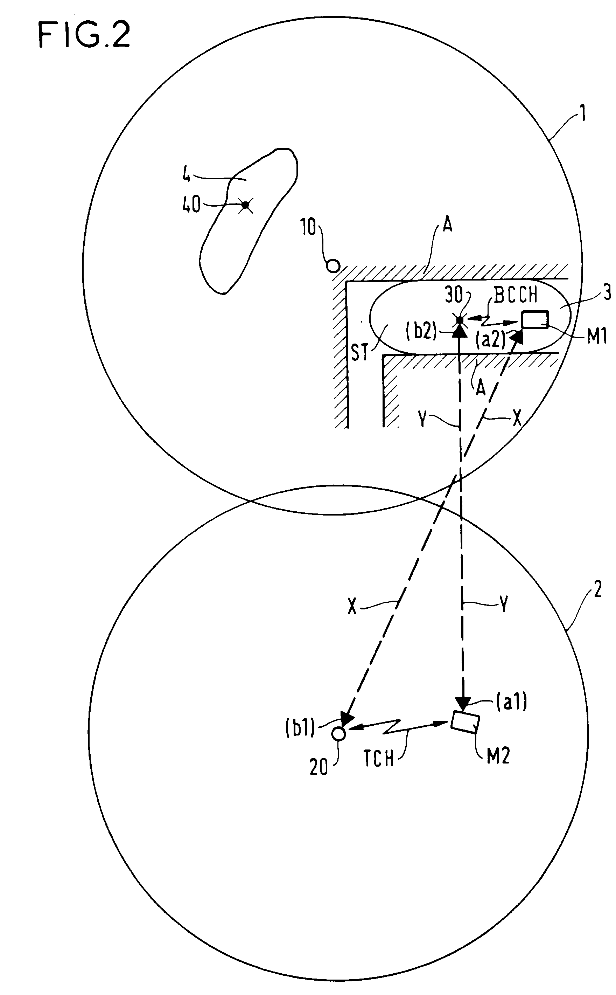

En référence à la figure 2, un réseau cellulaire multicouche de radiocommunications avec des mobiles comprend N=2 premières stations de base 10 et 20 définissant des macrocellules, ou zones de couverture macrocellulaires, respectives 1 et 2, et M=2 secondes stations de base 30 et 40 définissant des microcellules, ou zones de couverture microcellulaires, respectives 3 et 4. Les macrocellules 1 et 2 sont immédiatement adjacentes et la microcellule 3, appartenant à la zone de couverture de la macrocellule 1, est extérieure à la zone de couverture de la macrocellule 2. L'invention prévoit d'utiliser dans la microcellule 3, appartenant à la macrocellule 1, une paire de fréquences balises, respectivement de sens montant et descendant, identique à une paire de fréquences de trafic utilisée dans la macrocellule 2 qui est immédiatement adjacente à ladite macrocellule 1. Dans la terminologie G.S.M, les fréquences balises sont désignées, par abus de langage, par "fréquences BCCH", et les fréquences de trafic sont appelées "fréquences TCH". Deux mobiles M1 et M2 sont représentés et appartiennent respectivement à la microcellule 3 et à la macrocellule 2. Les deux fréquences balises de la paire de fréquences balises dans la microcellule 3, ou fréquences BCCH, respectivement de sens montant et de sens descendant, sont utilisées pour véhiculer des canaux de signalisation entre le mobile M1 et la station de base de microcellule 30. Les deux fréquences de trafic, ou TCH, respectivement de sens montant et descendant, dans la macrocellule 2 sont utilisées pour véhiculer un canal de trafic bidirectionnel entre le mobile M2 et la station de base de macrocellule 20. Les macrocellules 1 et 2 sont immédiatement adjacentes ou contigües en ce sens qu'elles ne sont séparées par aucune autre macrocellule; elles peuvent néanmoinsêtre séparées par une courte distance. Par ailleurs, il est important de noter que dans le cadre de l'invention, et en conformité avec la distinction opérée dans le G.S.M., une unique fréquence balise est définie pour chaque cellule, macrocellule ou microcellule, et toute fréquence qui n'est pas une fréquence balise dans cette cellule est une fréquence de trafic. Une fréquence balise peut être utilisée, en outre, pour véhiculer un ou des canaux de trafic, et une fréquence de trafic, par définition distincte de la fréquence balise, ne peut pas être utilisée pour véhiculer des canaux BCCH et CCCH.

Dans les microcellules 3 et 4, la fréquence balise BCCH peut ne pas être utilisée pour véhiculer des canaux de trafic, par exemple lorsque les microcellules opèrent en technique de saut de fréquence (frequency hopping). Chaque station de base de microcellule comprend alors un émetteur additionnel dédié à l'émission des canaux de signalisation BCCH et CCCH. Afin de justifier de la validité technique de l'invention et du caractère remarquable de sa mise en oeuvre, doivent être étudiés les effets de brouillage entre macrocellule 2 et microcellule 3. Entre les deux cellules 2 et 3, les brouillages peuvent être de quatre sortes:

* (a) dans le sens descendant,

   - (a1) le signal de fréquence balise BCCH de sens descendant émis en continu par la station de base de microcellule 30 peut brouiller le canal de trafic TCH, s'il existe, de sens descendant émis à partir de la station de base de macrocellule 20 vers le mobile M2, et, réciproquement,
   - (a2) ce canal de trafic de sens descendant émis à partir de la station de base de macrocellule 20 vers le mobile M2 peut brouiller le signal de fréquence balise BCCH de sens descendant émis en continu par la station de base de microcellule 30 vers le mobile M1, et

* (b) dans le sens montant,

   - (b1) un canal de signalisation porté par la fréquence balise BCCH de sens montant et émis par le mobile M1 vers la station de base de microcellule 30, peut brouiller le canal de trafic de sens montant émis à partir du mobile M2 vers la station de base de macrocellule 20, et, réciproquement,
   - (b2) ce canal de trafic de sens montant émis à partir du mobile M2 vers la station de base de macrocellule 20 peut brouiller le canal de signalisation porté par la fréquence balise BCCH de sens montant émis par le mobile M1 vers la station de base de microcellule 30.

Deux flèches en trait discontinu à deux extrémités chacune , notées X et Y, sont représentées dans la figure 2. Chacune des quatre extrémités de flèche pointe l'un respectif des mobiles M1, M2 et stations de base 20, 30 recevant ou bien le signal de fréquence balise, ou bien le canal de signalisation ou encore un canal de trafic subissant un brouillage éventuel, et est désignée par l'une respective des références (a1), (a2), (a3) et (a4) selon la nature du brouillage subi, en connexion avec ce qui a été dit précédemment.

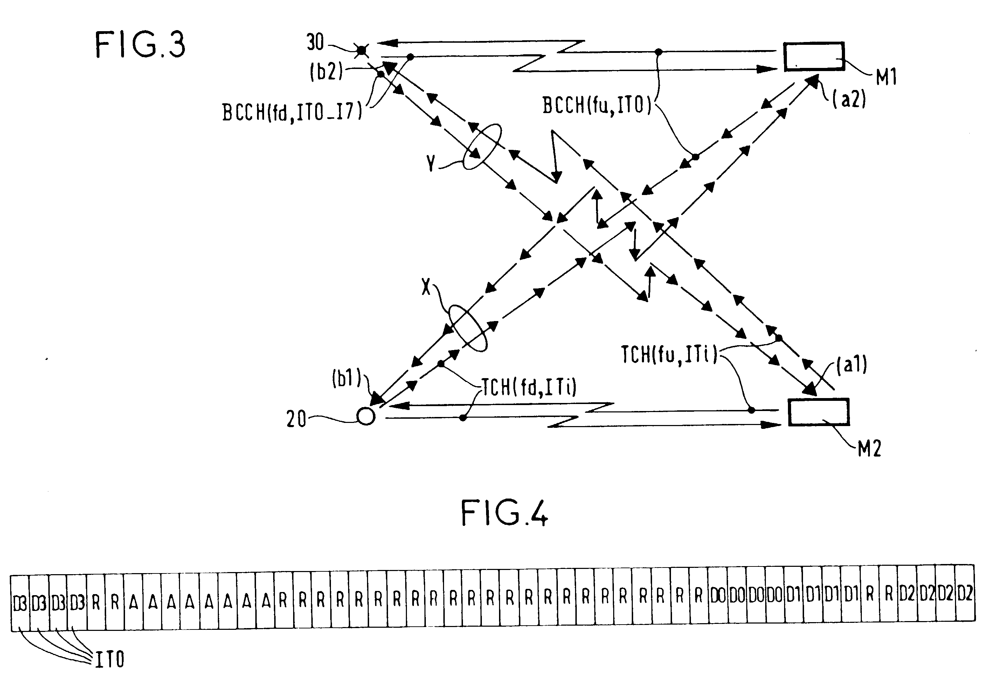

En référence à la figure 3 définissant, avec plus de détail que dans la figure 2, un bilan des brouillages entre microcellule 3 et macrocellule 2, à la fois pour les liaisons montantes et descendantes, il est étudié ci-après l'effet de chacun de ces brouillages. Dans cette figure 3, BCCH(fu, IT0) désigne le canal de signalisation de sens montant porté par la fréquence balise fu de sens montant dans un premier intervalle temporel IT0 de chaque trame. BCCH(fd, IT0-IT7) dénote le signal de fréquence balise de sens descendant à la fréquence fd émis en continu pour chacun des intervalles temporels IT0 à IT7 de la trame. TCH(fu, ITi) et TCH(fd, ITi) désignent deux canaux de trafic, respectivement de sens montant à la fréquence de trafic fu dans un intervalle temporel quelconque ITi de trame montante, avec i compris entre 0 et 7, et de sens descendant à la fréquence de trafic fd dans un même intervalle temporel ITi de trame descendante.

**I/ Brouillages entre station de base de microcellule 30 et mobile M2.**

Ces brouillages de deux sortes existant entre station de base de microcellule 30 et mobile M2 sont schématisés par les deux flèches en trait discontinu portées par la référence Y dans la figure 3. Ils regroupent, tel que décrit précédemment, d'une part,

   (b2) - le brouillage du canal de signalisation de sens montant BCCH(fu, IT0), émis à partir du mobile M1 vers la station de base de microcellule 30, par le canal de trafic de sens montant TCH(fu, ITi) émis par le mobile M2 vers la station de base de macrocellule 20, et, d'autre part,
   (a1) - le brouillage du canal de trafic de sens descendant TCH(fd, ITi), émis à partir de la station de base de macrocellule 20 vers le mobile M2, par le signal de fréquence balise BCCH(fd, IT0-IT7) émis en continu par la station de base de microcellule 30.

En pratique, ces brouillages de sens montant et de sens descendant entre station de base de microcellule 30 et mobile M2 sont quasiment négligeables. Les station de base 30 et mobile M2 ne sont pas à portée radioélectrique l'un de l'autre. Les structures microcellulaires sont typiquement utilisés dans des zones urbaines où les obstacles induisent une forte atténuation des champs radioélectriques. Par ailleurs, la station de base de microcellule 30 a une faible puissance, est couramment localisée dans une zone encaissée, et son antenne est typiquement disposée à une faible hauteur. La portée de la station de base de microcellule 30 est donc très faible. A titre d'exemple dans la figure 2, la station de base de microcellule 30 est destinée à couvrir une rue ST encadrée par des immeubles A, représentés en trait hachuré. La station de base 30 est disposée à une faible hauteur dans cette rue et sa portée se limite donc sensiblement à la rue. Les interférences, ou brouillages, entre le mobile M2 situé dans la macrocellule 2 et la station de base de microcellule 30 sont donc quasiment nuls.

## II/ Brouillages entre station de base de macrocellule 20 et mobile M1.

Ces brouillages sont de deux sortes et sont schématisés par les deux flèches en trait discontinu portées par la référence X dans la figure 3. Ils regroupent, tel que décrit précédemment, d'une part,

- (a2) le brouillage du signal de fréquence balise BCCH(fd, IT0-IT7) de sens descendant, émis en continu par la station de base de microcellule 3 vers le mobile M1, par le canal de trafic de sens descendant TCH(fd, ITi) émis à partir de la station de base de macrocellule 20 vers le mobile M2, et, d'autre part,
- (b1) le brouillage du canal de trafic de sens montant TCH(fu, ITi), émis à partir du mobile M2 vers la station de base de macrocellule 20, par le canal de signalisation BCCH(fu, IT0) de sens montant émis par le mobile M1 vers la station de base de microcellule 30.

Ces deux types de brouillage ne peuvent, pour leur part, être négligés et vont maintenant être étudiés séparément.

## IIa/Etude du brouillage du signal de fréquence balise BCCH(fd, IT0-IT7) par le canal de trafic TCH(fd, ITi).

Il convient pour cette première étude de définir, à la fois pour la station de base de macrocellule 20 et pour la station de base de microcellule 30, des paramètres radioélectriques caractérisant ces stations de base. Ces différents paramètres sont la puissance d'émission, le gain d'antenne, l'affaiblissement de parcours et le rayon de la cellule. Les valeurs, données ci-dessous, prises par ces différents paramètres, tant pour la station de base de microcellule 30 que pour la station de base de macrocellule 20, correspondent à des valeurs représentatives adaptées à une réalisation pratique. Ces valeurs ont été choisies sur la base de la Recommandation GSM 03.30, Version 4.2.0 intitulée "Radio Network Planning Aspects", produit par l'ETSI, juillet 1993.

Pour la station de base de microcellule 30, ces valeurs sont les suivantes:

- Puissance d'émission $P_{30}$ = 18 dBm,
- Gain d'antenne $G_{30}$ = 3 dBi,
- Affaiblissement de parcours $A_{30}$ = [106,7+26.log $(d_{30})$]dB,
- Rayon de la microcellule $R_{30}$ = 200 mètres,

où dBm est une unité de mesure en décibels de la puissance de l'antenne par rapport à une unité élémentaire qui est le mWatt, dBi est une unité de mesure en décibels de la puissance rayonnée par l'antenne par rapport à une antenne de référence, et $d_{30}$ est la distance, exprimée en kilomètres (km), séparant la station de base de microcellule du point considéré pour le calcul d'affaiblissement de parcours. Les unités dBm, dBi et dB sont des unités cohérentes.

Par ailleurs, pour la station de base de macrocellule 20, ces valeurs sont les suivantes:

- Puissance d'émission $P_{20}$ = 38 dBm,
- Gain d'antenne $G_{20}$ = 11 dBi,
- Affaiblissement de parcours $A_{20}$ = [132,8+ 38.log $(d_{20})$]dB,
- Rayon de la macrocellule $R_{20}$ = 1 kilomètre.

où $d_{20}$ est la distance, exprimée en kilomètres, séparant la station de base de macrocellule 20 du point considéré pour le calcul d'affaiblissement de parcours. La valeur de puissance d'émission $P_{20}$ correspond à une puissance maximale d'émission du canal de trafic TCH(fd, ITi) par la station de base de macrocellule. Dans le GSM, cette puissance d'émission varie pour chaque canal de trafic émis en fonction de la distance séparant le mobile M2 de la station de base 20. Elle a été choisie maximale pour montrer la validité technique de l'invention dans un cas défavorable.

Rappelons qu'il est étudié ici le brouillage, par le canal de trafic TCH(fd, ITi) émis de la station 20 vers le mobile M2, du signal de fréquence balise BCCH(fd, IT0-IT7) émis de la station 30 vers le mobile M1. Il s'agit donc du brouillage agissant en réception pour le mobile M1, situé dans la microcellule 3, et résultant de l'émission par la station de base de macrocellule 20.

Considérons le cas extrême selon lequel le mobile M1 est situé à une distance de 200 mètres de la station de base de microcellule 30, à la frontière de la microcellule 3. La puissance, exprimée en décibels, reçue par le mobile M1 en provenance de la station de base de microcellule 30, et notée $P_{30}(M1)$, s'écrit alors:

$$P_{30}(M1) = P_{30} + G_{30} - A_{30},$$

soit

$$P_{30}(M1) = 18 \text{ dBm} + 3 \text{ dBi} - [106,7 + 26.\log(0,2)]\text{dB},$$

soit

$$P_{30}(M1) \tilde{~} - 67,5 \text{ dBm}.$$

La puissance, exprimée en décibels, reçue par le mobile M1 à partir de la station de base de macrocellule 20, et notée $P_{20}(M1)$, s'écrit pour sa part:

$$P_{20}(M1) = P_{20} + G_{20} - A_{20},$$

soit

$$P_{20}(M1) = 38 \text{ dBm} + 11 \text{ dBi} - [132,8 + 38.\log(D)]\text{dB},$$

où D dénote la distance séparant la station de base de macrocellule 20 du mobile M1, soit

$$P_{20}(M1) = - [83,8 + 38.\log(D)]\text{dBm}.$$

Afin que le brouillage du signal de fréquence balise BCCH(fd, IT0-IT7) par le canal de trafic TCH(fd, ITi) soit négligeable, il faut et il suffit que la puissance $P_{30}(M1)$ reçue par le mobile M1 en provenance de la station de base de microcellule 30 soit supérieure d'au moins 9 dB à la puissance $P_{20}(M1)$ reçue par le mobile M1 en provenance de la station de base de macrocellule 20, ce qui s'écrit:

$$P_{30}(M1) > P_{20}(M1) + 9 dB,$$

soit:

$$-67,5 > - 83,8 - 38.\log(D) + 9,$$

soit:

$$\log(D) > (-83,8 + 67,5 + 9)/38 ,$$

ce qui est équivalent à:

$$D > 10^{-0,19},$$

soit:

$$D > 0,645 \text{ km.}$$

Ainsi, pour que le brouillage du signal de fréquence balise BCCH(fd, IT0-IT7) par le canal de trafic TCH(fd, ITi) soit négligeable, il faut que la distance séparant la station de base de macrocellule 20 du mobile M1 soit supérieure à 645 mètres, ce qui est toujours vérifié quelque soit la localisation du mobile M1 puisque le rayon $R_{20}$ de la macrocellule 2 est de 1 kilomètre.

Il est à noter dès à présent que le raisonnement qui précède ne pourrait être développé pour le cas où l'on se proposerait d'utiliser des fréquences de trafic identiques pour les microcellule 3 et macrocellule 2. En effet, dans ce cas, en sachant, d'une part, que la microcellule 3 est destinée à couvrir une zone urbaine encaissée (typiquement une rue), et que, d'autre part, l'affaiblissement en réception est proche de 20 dB dès lors que le mobile M1 quitte cette zone (passage d'un angle de rue), il apparaît alors que la puissance du canal de trafic, à une fréquence donnée, reçue par le mobile M1 après avoir quitté cette zone en provenance de la station de base de macrocellule 20 brouillerait momentanément le canal de trafic descendant établi entre le mobile M1 et la station de base de microcellule 30 à cette même fréquence, pour une phase critique de cette communication qui concerne le changement de cellule, alors devenu nécessaire.

**IIb/Etude du brouillage du canal de trafic TCH(fu, ITi) par le canal de fréquence balise BCCH(fu, IT0).**

Il est étudié ici le brouillage, par le canal de fréquence balise BCCH(fu, IT0) émis du mobile M1 vers la station 30, du canal de trafic TCH(fu, ITi) émis du mobile M2 vers la station 20. Il est rappelé que le canal BCCH (fu, IT0) n'est émis à partir d'un quelconque mobile M1 dans la microcellule 3 vers la station de base de microcellule 30 qu'avec une répétition maximale d'un intervalle temporel par trame (1 intervalle temporel sur 8 en G.S.M). La microcellule peut être définie par les caractéristiques, notamment de trafic, suivantes tout à fait représentatives:

- Capacité = 8 intervalles temporels (IT) par trame dont 7 IT, ou fenêtres, de trafic, et 1 IT, de rang 0, occupé par le canal de fréquence balise BCCH (fu, IT0),

- Probabilité de blocage d'appel = 2 % ,
- Durée moyenne d'un appel = 80 secondes,
- Nombre d'établissement de canaux SDCCH entre deux appels = 5, et
- Durée moyenne d'échange de données dans un SDCCH = 4s.

Le signification du terme "SDCCH" est donné ci-après en référence à la figure 4. Cette figure 4 montre une multitrame-51 qui définit un motif de transmission de sous-canaux dans le canal de signalisation de fréquence balise BCCH(fu, IT0) montant émis à partir des mobiles vers la station de base. Cette multitrame-51 définit l'organisation de la transmission des sous-canaux dans 51 intervalles temporels de rang 0 successifs. Ces sous-canaux sont les sous-canaux de contrôle dédiés, ou SDCCH, les sous-canaux de contrôle associés aux échanges d'information, ou ACCH, et les sous-canaux d'accès aléatoire des mobiles, ou RACH. Ces sous-canaux SDCCH, ACCH et RACH sont respectivement repérés par les lettres D, A et R dans la figure 4. Il existe 4 sous-canaux SDCCH qui sont notés D0, D1, D2 et D3. Les quatre sous-canaux SDCCH (D0, D1, D2 ou D3) occupent chacun 4 intervalles temporels successifs de rang 0 dans la multitrame-51. Pour de plus amples informations sur cette structure de multitrame-51, le lecteur pourra se reporter à l'ouvrage intitulé "Systèmes de radiocommunications avec les mobiles" de Jean-Gabriel REMY et al. édité par EYROLLES dans la collection technique et scientifique des télécommunications (CNET-ENST), Edition 1988, pages 589-594.

En fonction du nombre de voies de trafic, égal à 7 tel que signalé ci-dessus, et de la probabilité de blocage de 2%, il peut être déduit le trafic, exprimé en Erlang, dans la microcellule 3. Ce trafic, donné par exemple par le tableau d'Erlang à la page 374 de l'ouvrage précité "Systèmes de radiocommunications avec les mobiles" est égal à 3 Erlang. Le nombre d'appels par seconde dans la microcellule est égal au rapport du trafic sur la durée moyenne d'un appel, soit $(3/80) = 3,75.10^{-2}$ appel/seconde. Sachant que le nombre d'établissements de canaux SDCCH entre deux appels est égal à 5, le nombre d'établissements de canaux SDCCH par seconde est égal à 5 fois le nombre d'appels par seconde, soit $5.(3,75.10^{-2}) = 0,187$ établissements de canaux SDCCH par seconde. La durée moyenne d'échange de données dans un canal SDCCH est supposée égale à 4 secondes. Le trafic en Erlang dans un canal SDCCH D0, D1, D2 ou D3 est donc égal à $(0,187 . 4) \sim 0,75$ Erlang. Comme il a été vu précédemment, les canaux SDCCH sont en nombre égal à 4, et sont D0, D1, D2 ou D3. Dire que l'on a un trafic de 0,75 Erlang pour un canal SDCCH signifie que statistiquement, pour une durée t donnée, un trafic de durée (0,75 . t) est écoulé. Si ce trafic de durée (0,75.t) se répartit statistiquement de manière équiprobable dans les 4 canaux SDCCH (D0, D1, D2 et D3), alors chacun des 4 sous-canaux SDCCH écoule pendant cette même durée t, un trafic de durée égale à (0,75/4).t= 0,19.t. Le taux d'occupation moyen de chaque intervalle temporel IT0 de rang 0 constituant les canaux SDCCH est donc sensiblement égal à 19%.

En revenant à la figure 4, il apparaît que le taux d'occupation moyen des intervalles temporels de rang 0 (IT0) formant le canal de fréquence balise BCCH(fu, IT0), n'est pas limité au seul taux d'occupation moyen de chaque intervalle temporel IT0 de rang 0 occupé par les sous-canaux SDCCH, sachant que le canal BCCH (fu, IT0) comprend d'autres sous-canaux qui sont ACCH et RACH. En pratique, ces canaux, de par leur nature, reçoivent un trafic quasi-nul. Il peut donc être déduit que le taux d'occupation moyen des intervalles temporels de rang 0 formant le canal de fréquence balise BCCH(fu, IT0) est proche de (19/2)%, soit 10% pour arrondir. Ce calcul est très largement pessimiste de par les hypothèses faites, et, en moyenne, les résultats obtenus sont bien meilleurs, 10% étant une valeur maximale. En pratique, dans une microcellule, les canaux SDCCH peuvent être véhiculés par une fréquence distincte de la fréquence balise dans un intervalle temporel distinct de l'intervalle temporel de rang 0. Dans le cadre du GSM, la grande proportion des messages de sens montant émis dans les canaux SDCCH par les mobiles sont des messages de mise à jour de localisation (messages "LocUpdate"). Deux types de messages de mise à jour de localisation peuvent être distingués. Il s'agit des messages dits de mobilité, et des messages périodiques. Les messages de mobilité sont émis par les mobiles lorsqu'ils changent de zone, une zone étant délimitée par une ou plusieurs macrocellules. Un mobile émet donc un message de mobilité typiquement lorsqu'il rentre dans une macrocellule. Les messages périodiques sont émis par les mobiles périodiquement à une fréquence prédéterminée indépendamment de tout événement. Statistiquement, les messages de mobilité sont émis beaucoup plus fréquemment par les mobiles. Il peut donc apparaître opportun, lors de l'installation de nouvelles microcellules dans une macrocellule donnée, que pour les microcellules les plus extérieures dans ladite macrocellule donnée, les canaux SDCCH soient véhiculées à une fréquence distincte de la fréquence balise dans un intervalle temporel distinct de l'intervalle temporel de rang 0, et que dans les microcellules les plus intérieures dans ladite macrocellule donnée, les canaux SDCCH soient véhiculées à la fréquence balise dans l'intervalle temporel de rang 0. Ainsi, dans les microcellules les plus extérieures, seules susceptibles de recevoir des messages de mise à jour de localisation de mobilité en provenance de mobiles entrant dans ladite macrocellule donnée à laquelle appartiennent ces microcellules les plus extérieures, les canaux SDCCH (D0, D1, D2 et D3) portés, à une fréquence distincte de la fréquence balise, dans l'intervalle temporel de rang 0, ne perturbent pas un canal de trafic établi dans une macrocellule adjacente à la macrocellule donnée.

Ainsi, en résultat de tout ce qui précède, et en supposant que le canal de trafic TCH(fu, ITi) de sens montant entre le mobile M2 et la station de base de macrocellule 20 soit établi dans un intervalle temporel coïncidant avec l'intervalle temporel IT0 de rang 0 sur lequel est véhiculé le canal de fréquence balise entre le mobile M1 et la station de base de microcellule 30, seulement 10% de la communication transmise du mobile M2 vers la station de base 20 est brouillé.

Il pourrait être démontré que le principe de l'invention d'utiliser dans une microcellule quelconque à l'extérieur de la zone de couverture d'une macrocellule, une paire de fréquences balises identiques à une paire de fréquences de trafic utilisée dans la macrocellule, est limité strictement à cette réalisation. Il ne peut être appliqué en ce qui concerne la réutilisation de deux paires identiques de fréquences de trafic. En effet, l'impossibilité d'utiliser deux paires identiques de fréquences de trafic résulte, d'une part, de ce qui a été souligné à la fin du paragraphe IIa/ de cette description, et, d'autre part, du fait que le brouillage du canal de trafic montant, établi entre mobile M2 et station 20, par le canal de trafic montant, établi entre le mobile M1 et la station 30, est trop élevé dès lors que ces deux canaux coïncident avec un même intervalle temporel de trame. Ainsi, l'invention trouve tout son intérêt par comparaison avec la demande de brevet britannique GB-A-2 260 879 en ce que la microcellule à installer pourra utiliser comme fréquence de trafic, et non comme fréquence de contrôle, une fréquence identique à une fréquence utilisée comme fréquence de trafic dans une macrocellule distante. Il en résulte alors une optimisation de la réutilisation des fréquences.

Par ailleurs, l'utilisation de deux paires identiques de fréquences balise, respectivement dans la macrocellule 2 et la microcellule 3, est permise dans le cadre du G.S.M en différenciant ces deux paires par deux codes d'identification (BSIC en terminologie anglo-saxonne pour Base Station Identification Code) respectifs distincts dans ces deux cellules. Néanmoins, cette solution connue n'offre qu'un gain réduit de réutilisation de fréquence. Par contre l'invention apporte un gain significatif en planification fréquentielle sachant que le nombre de fréquences de trafic dans une macrocellule est élevé, et que le nombre de microcellules, et donc de fréquences balises, utilisées dans une macrocellule est également élevé. La possibilité de réutiliser dans une microcellule une fréquence balise identique à une fréquence de trafic dans une macrocellule immédiatement voisine, compte tenu de ce qui précède, augmente considérablement la capacité d'un réseau microcellulaire.

En résultat de ce qui précède, l'invention prévoit également un procédé d'optimisation fréquentielle d'un réseau cellulaire multicouche de radiocommunications avec des mobiles mis en oeuvre lors de l'adjonction d'une station de base définissant une microcellule donnée qui appartient à une zone de couverture d'une macrocellule donnée. Le procédé comprend pour cela la sélection d'une fréquence de trafic de sens descendant utilisée dans une macrocellule adjacente à ladite macrocellule donnée, et l'installation de la station de base de microcellule, définissant la microcellule donnée, de telle sorte qu'une fréquence balise émise par ladite station de base de microcellule soit identique à ladite fréquence de trafic de sens descendant sélectionnée utilisée dans ladite macrocellule adjacente.

Ainsi une microcellule selon l'invention appartient à une zone de couverture d'une macrocellule donnée et utilise une fréquence balise BCCH identique à une fréquence de trafic TCH utilisée dans une macrocellule immédiatement adjacente à ladite macrocellule donnée. La macrocellule donnée peut correspondre à une couverture radioéléctrique réelle dans le cas où la microcellule est une microcellule interne, ou correspondre à une couverture fictive, ne correspondant pas à une couverture radioélectrique, dans le cas où la microcellule est externe.

Un organe d'allocation de fréquence pour une microcellule appartenant à une zone de couverture d'une macrocellule donnée est également fourni par l'invention. Cet organe est typiquement inclus dans la station de base de microcellule elle-même, ou dans un contrôleur de station de base, ou encore dans un équipement isolé. Il comprend un moyen pour allouer à la microcellule une fréquence balise BCCH identique à une fréquence de trafic TCH utilisée dans une macrocellule adjacente à ladite macrocellule donnée. Cet organe peut être réalisé sous forme logicielle.

**Revendications**

1. Procédé d'optimisation fréquentielle d'un réseau cellulaire multicouche de radiocommunications avec des mobiles lors d'une adjonction d'une station de base de microcellule (30) quelconque définissant une microcellule donnée (3) qui appartient à une zone de couverture d'une macrocellule donnée (1),

   ledit réseau étant un à accès multiple à répartition dans le temps (AMRT) et accès multiple à répartition en fréquence (AMRF) combinés, et comprenant des macrocellules (1, 2), et des microcellules (3, 4), chacune desdites macrocellules (1, 2) étant associée à au moins une fréquence balise (BCCH) et au moins une fréquence de trafic (TCH), et chacune desdites microcellules (3, 4) étant associée à au moins une fréquence balise (BCCH), caractérisé en ce qu'il comprend l'étape d'allocation à ladite microcellule d'une fréquence balise (BCCH) identique à une fréquence de trafic (TCH) utilisée dans une macrocellule (2) immédiatement adjacente à ladite macrocellule donnée (1).

2. Réseau cellulaire multicouche de radiocommunications avec des mobiles obtenu selon le procédé de la revendication 1,

   caractérisé en ce que ladite microcellule (3) appartenant à la zone de couverture de la macrocellule donnée (1) utilise une fréquence balise (BCCH) identique à une fréquence de trafic (TCH) utilisée dans ladite macrocellule (2) immédiatement adjacente à ladite macrocellule donnée (1).

3. Réseau cellulaire conforme à la revendication 2, caractérisé en ce qu'il met en oeuvre un mode duplex à deux fréquences, respectivement de sens montant et de sens descendant, et en ce que ladite microcellule (3) utilise, d'une part, une fréquence balise de sens montant (BCCH) identique à une fréquence de trafic de sens montant (TCH) utilisée dans ladite macrocellule adjacente (2), et, d'autre part, une fréquence balise de sens descendant (BCCH) identique à une fréquence de trafic de sens descendant (TCH) utilisée dans ladite macrocellule adjacente (2).

4. Réseau cellulaire conforme à l'une quelconque des revendications 2 et 3, caractérisé en ce qu'il couvre une zone urbaine.

5. Réseau cellulaire conforme à l'une quelconque des revendications 1 à 4, caractérisé en ce qu'il est un réseau conforme aux normes G.S.M.

6. Réseau cellulaire conforme à l'une quelconque des revendications 1 à 4, caractérisé en ce qu'il est un réseau conforme aux normes DCS 1800.

# FIG.1

# FIG.2

# FIG.3

30

(b2)

BCCH(fd,IT0_I7)

BCCH(fu,IT0)

(a2)

M1

Y

X

(b1)

TCH(fu,ITi)

TCH(fd,ITi)

(a1)

20

M2

# FIG.4

| D3 | D3 | D3 | D3 | R | R | A | A | A | A | A | A | A | A | R | R | R | R | R | R | R | R | R | R | R | R | R | R | R | R | R | R | R | R | D0 | D0 | D0 | D0 | D0 | D1 | D1 | D1 | D1 | R | R | D2 | D2 | D2 | D2 |

IT0

EP 0 712 259 A2